# EUROPÄISCHE PATENTSCHRIFT

(11) **EP 1 734 831 B1**
(45) Veröffentlichungstag und Bekanntmachung des Hinweises auf die Patenterteilung: **17.09.2008**
(21) Anmeldenummer: 05738243.4
(22) Anmeldetag: 05.04.2005
(51) Int. Cl.: A23B 4/005, A22C 7/00, A22C 11/00

(54) **VERFAHREN ZUR OBERFLÄCHENBEHANDLUNG, GLEICHZEITIGEM PORTIONIEREN UND FORMEN SOWIE HALTBARMACHEN VON LEBENSMITTELN WIE FLEISCH- UND WURSTWAREN, WURSTBRÄT ODER DERGLEICHEN PRODUKTE**
PROCESS FOR THE SIMULTANEOUS SURFACE TREATMENT, APPORTIONING AND SHAPING AND CONSERVATION OF FOODSTUFFS SUCH AS MEAT AND SAUSAGE PRODUCTS, SAUSAGE MEAT OR THE LIKE
PROCEDE POUR LE TRAITEMENT SUPERFICIEL, LE PORTIONNEMENT ET LE MOULAGE SIMULTANES AINSI QUE LA CONSERVATION DE PRODUITS ALIMENTAIRES TELS QUE VIANDE, CHARCUTERIE, CHAIR A SAUCISSE OU AUTRES PRODUITS SIMILAIRES

(30) Priorität: 16.04.2004 DE 102004018595
(43) Veröffentlichungstag der Anmeldung: 27.12.2006
(73) Patentinhaber: Kortschack, Fritz, 14089 Berlin (DE)
(72) Erfinder: Kortschack, Fritz, 14089 Berlin (DE)
(74) Vertreter: Kruspig, Volkmar
(86) Internationale Anmeldenummer: PCT/EP2005/003571
(87) Internationale Veröffentlichungsnummer: WO 2005/099465

(56) Entgegenhaltungen:
- DE-A1- 19 859 830
- US-A- 3 068 104
- US-A- 3 863 020
- US-A- 5 472 725
- US-A- 6 135 869

## Beschreibung

Die Erfindung betrifft ein Verfahren zur Oberflächenbehandlung, gleichzeitigem Portionieren und Formen sowie Haltbarmachen von Lebensmitteln wie Fleisch- und Wurstwaren, Wurstbrät oder dergleichen Produkten, auch ohne Einsatz von Därmen oder hüll- oder beutelartigen Folien.

Das Dokument US 6135869 A offenbart ein Verfahren, wobei eine Verdichtung eines Fleischprodukts zwischen zwei formgebenden Platten erfolgt, und das Produkt durch mechanischen kontakt der Platten getrennt wird.

Aus der DE 198 07 794 C2 ist ein Verfahren zur Herstellung und zur Formgebung von Lebensmitteln wie z.B. Fleisch- und Wurstwaren vorbekannt, wobei die Lebensmittel zum Schutz gegen Rekontamination vor der endgültigen Haldbarmachung mit Folien umhüllt werden.

Gemäß der dortigen Offenbarung werden befüllte Folien bzw. Folienbeutel zwischen Platten justiert, welche mit Mulden versehen sind. Um eine gleichmäßige Verteilung des Füllgutes innerhalb der Folienbeutel zu erreichen, werden zunächst die Platten zusammengeführt. Ab einem bestimmten Plattenabstand oder Innendruck des Beutels wird durch feine Löcher in den Plattenausmuldungen die Luft zwischen Folie und Mulde abgesaugt. Hierdurch wird die Folie gedehnt und an die Innenwand der Mulden gepresst. Gleichzeitig wird das Brät durch weitere Verringerung des Plattenabstands vollständig in die Mulden gedrängt, so dass die nicht ausgeformten Folien plan aufeinander liegen. Sollen dann die Fertigprodukte einzeln den Packungen entnommen werden, ist es möglich, die plan aufeinander liegenden Folienbereiche durch einen Fett- und Eiweißfilm hindurch zu versiegeln.

Die verpackten Halbfertigprodukte können danach zur Zwischenlagerung tiefgefroren, sofort erhitzt und anschließend abgekühlt oder mit Hochdruck zur Fertigstellung behandelt werden.

Die auf den Anmelder zurückgehende, noch unveröffentlichte DE 103 03 274.6 offenbart ein Verfahren zur Oberflächenbehandlung, Verpackung und Haltbarmachung von Lebensmitteln wie Fleisch- oder Wurstwaren.

Nach der dortigen Aufgabenstellung gilt es, die Oberflächenbehandlung in den Fertigungsprozess selbst technologisch optimiert einzuordnen, wobei es Ziel ist, dem dann verpackten Produkt eine optimale, gleichmäßig verteilte und im wesentlichen auf die Oberfläche beschränkte Behandlung mit farbgebenden, geschmacksbildenden oder geruchsgebenden Stoffen zu verleihen.

Zur Lösung der Aufgabe wird bei einer ersten Ausführungsform die Beutel- oder Folieninnenseite vor dem Befüllen mit dem Halbfertigprodukt, insbesondere Brät, mit einem vorzugsweise erwärmten Gemisch aus einem Behandlungsstoff und Trägermaterial beaufschlagt. Das Gemisch aus Behandlungsstoff und Trägermaterial besteht z.B. aus Geschmacksbildnern, Geruchsstoffen und/oder Dektorstoffen sowie Gelatine, Fetten, Fettgemischen oder dergleichen Produkten.

Beim eigentlichen Schritt des Haltbarmachens der Halbfertigprodukte durch Wärmebehandlung geht das aufgebrachte Gemisch aus Behandlungsstoff und Trägermaterial von einem pulvrigen, gelartigen oder nahezu festen Zustand in den flüssigen Zustand über, wodurch eine gewünschte, gleichmäßige Verteilung auf der Oberfläche des Halbfertigprodukts eintritt, so dass ansprechende Eigenschaften bzw. eine optimierte Oberflächenstruktur gegeben ist. Insofern ist das Behandlungsgemisch bei Raumtemperatur und darunter vorzugsweise pastös bis teigig-pastös und besteht aus einer solchen Gemischkombination, dass diese bei Erwärmung in den flüssigen Aggregatzustand übergeht.

Zur Behandlung und zum Haltbarmachen ist es nach der vorstehend beschriebenen Lehre also zwingend notwendig, die Beutel- oder Folieninnenseiten vor dem Befüllen mit dem Halbfertigprodukt mit dem Gemisch aus Behandlungsstoff und Trägermaterial zu beaufschlagen, wobei im Nachhinein durch Wärmebehandlung das Gemisch aus Behandlungsstoff und Trägermaterial zeitweise in den flüssigen Zustand übergeht und hierdurch die gewünschte Gleichverteilung auf der Oberfläche des Halbfertigprodukts eintritt.

Zur Herstellung von Wurstprodukten mit unterschiedlichen geometrischen Formen ist es bekannt, Wurstbrät in Därme zu füllen und danach den befüllten Darm in Handarbeit in die gewünschte Form zu überführen. Die Wurstprodukte werden als frische, ungebrühte Ware und als pasteurisierte, gebrühte Waren, lose oder verpackt angeboten.

Aus Fleischmagazin 3/2004, Seite 26 bis 30, ist es bekannt, durch computergesteuerte Bewegung von Fülldüsen eine bestimmte Brätform ohne Darm auf ein Förderband zu spritzen. Zum Haltbarmachen und zur Produktverfestigung erfährt dann dieses aufgespritzte Brät anschließend eine Wärmebehandlung.

Bekannterweise hat ungebrühte Ware den Vorteil einer sich auch optisch erschließenden Frische. Beim Brühen entstehen während des Fertigungsprozesses durch den Brühvorgang bedingt Inhaltsstoffverluste.
Gebrühte Ware weist infolge des Erhitzungsvorgangs eine deutlich längere Haltbarkeit auf, jedoch entsteht während des Brühvorgangs, besonders bei Produkten, die ohne Darm gefertigt werden, ein erheblicher Produktionsschwund durch den Verlust von Flüssigkeit, Eiweiß und weiteren Inhaltsstoffen. Der dem Erhitzungsprozess nachgeschaltete Abkühlvorgang, in der Regel mittels Kühlwasser, begünstigt die Rekontamination der Wurstoberfläche, so dass aufgrund der Erhöhung des a_{w}-Wertes an der Oberfläche der Produkte die Haltbarkeit stark reduziert wird.

Ungebrühte Ware wird in der Regel im Naturdarm angeboten. Diese Naturdärme werden vor ihrer Verwendung gewässert und bieten daher ebenfalls einen guten Nährboden für unerwünschte Keime, was für die Haltbarkeit solcher Produkte von Nachteil ist.

Aus dem Vorgenannten ist es daher Aufgabe der Erfindung, ein weiterentwickeltes Verfahren zur Oberflächenbehandlung, gleichzeitigem Portionieren und Formen sowie Haltbarmachen von Lebensmitteln wie Fleisch- und Wurstwaren, Wurstbrät oder dergleichen Produkten anzugeben, das sowohl ohne Einsatz von Därmen oder Hüllen bzw. beutelartigen Folien auskommt als auch bei einer eventuellen Verwendung derartiger Hüllmaterialien keine Nachteile zeigt, wobei die Formgebung reproduzierbar sein soll und die Gefahr eines Kontaminierens oder Rekontaminierens im Sinne einer optimierten Haltbarkeit verringert werden kann.

Die Lösung der Aufgabe der Erfindung erfolgt durch ein Verfahren gemäß Definition nach der Lehre des Patentanspruchs 1, wobei die Unteransprüche mindestens zweckmäßige Ausgestaltungen und Weiterbildungen darstellen.

Demnach wird bei dem Verfahren zur Oberflächenbehandlung, gleichzeitigem Portionieren und Formen sowie Haltbarmachen von Lebensmitteln wie Fleisch- und Wurstwaren, Wurstbrät oder dergleichen Produkten zunächst ein Verdichten des Produkts zwischen zwei formgebenden, mindestens teilweise strukturierten Platten vorgenommen. Während des Verdichtens erfolgt ein Trennen des Produkts in Formabschnitte durch mechanisches Inkontaktkommen entsprechender Bereiche oder Teile der formgebenden Platten, die quasi die Wirkung einer Schneid- oder Trennvorrichtung zeigen.

Hiernach oder bereits während des Verdichtungsvorgangs wird ein gezieltes, dosiertes Erhitzen des Produkts, vorzugsweise über die formgebenden Platten selbst, zur Ausbildung einer einen verringerten a_{w}-Wert aufweisenden Eigenhaut auf der Oberfläche des Produkts vorgenommen, wodurch sich sowohl eine Produktformstabilisierung als auch eine keimreduzierende Wirkung ergibt.

Bei einem nur kurzzeitigen, sehr sorgsam dosierten Erhitzen bildet sich eine dünne, nach Abkühlung wieder transparent erscheinende Eigenhaut mit reduziertem a_{w}-Wert aus, so dass insgesamt sich die optische Wirkung eines nahezu frischen Produkts einstellt.

Durch länger andauerndes, stärkeres Erhitzen mit intensiverer Wärmeeinwirkung ist es möglich, eine Oberflächenschicht auszubilden, welche vorgegrillter oder gebackener Ware entspricht.

Es kann also durch einfache Veränderung von Verfahrensparametern ein Produkt erzeugt werden, das unterschiedlichen Kundenwünschen gerecht wird.

Bei der denkbaren Verwendung von Hüllen, insbesondere Därmen, wird eine Keimreduzierung des Hüll- oder Darmmaterials durch die Hitzeeinwirkung neben der Ausbildung der stabilisierenden Eigenhautschicht bewirkt.

Durch die Formgebung wird ein reproduzierbares Kalibrieren von Würsten oder dergleichen Produkten erreicht, wobei die Endform durch die stabilisierte Eigenhaut bei Entnahme der Produkte aus den formgebenden Platten erhalten bleibt.

Durch die Hitzeeinwirkung auf ein gegebenenfalls vorhandenes Hüll- oder Darmmaterial wird Feuchte aus diesem ausgetrieben und es findet ein vorteilhafter Trocknungsprozess statt.

Um ein Verschweißen oder Verkleben eines Hüllmaterials zu verhindern, sind im Bereich der Trennabschnitte die formgebenen Platten mit einer thermischen Isolierung oder einer gezielten Kühlung versehen.

Die Erfindung soll nachstehend anhand eines Ausführungsbeispiels und weiterer Ausführungsformen näher erläutert werden.

Bei einer Ausführungsform der Erfindung wird zwischen zwei Platten, von denen zumindest eine oder aber auch beide, spiegelbildlich zueinander, die gewünschten geometrischen Abmessungen aufweisen, das Brät derart verdichtet, dass die Ausformungen bzw. Erhebungen in den Formen am Ende des Verdichtungsabschnitts eine Trennung des Wurstbräts verursachen.
Wird dann die Oberfläche der gegebenenfalls beschichteten quasi Stempelformen erhitzt oder werden bereits erhitzte Stempel eingesetzt, koaguliert das Eiweiß an der Oberfläche des Behandlungsgutes und es bildet sich eine Eigenhaut aus, die in der Folge des weiteren Fertigungsprozesses verhindert, dass sich das Brät der vereinzelten Halbfertigware wieder miteinander verbindet.

Hierbei wird erreicht, dass die Koagulationsschicht einen deutlich verringerten a_{w}-Wert aufweist, so dass sich auf dieser relativ trockenen Oberfläche im Verhältnis zu einer feuchten oder nassen Oberfläche nur eine geringe Anzahl von Keimen ansiedeln kann.

Derartig hergestellte frische Produkte lassen sich bei einer feindosierten Oberflächenerwärmung nicht von Produkten unterscheiden, die in einen Darm gefüllt wurden. Die Oberfläche einer nur dünn koagulierten Eiweißschicht wird in überraschender Weise nach der Behandlung wieder transparent bzw. durchscheinend. Solche Produkte lassen sich sowohl lose als auch als SB-Ware vermarkten.

Zur Herstellung von bereits vorgegrillten Wurstwaren oder gebackenen Produkten, z.B. Backleberkäse, ist es in einer Ausführungsform der Erfindung möglich, durch eine Intensivierung der Wärmeeinstrahlung die Oberfläche der Halbfertigwaren so zu gestalten, dass diese mit der äußeren Erscheinung einer tatsächlich gegrillten Wurst bzw. einem Backleberkäses vergleichbar ist.

Entsprechend bekannten Herstellungsverfahren für gebrühte Darmware, können die darmlosen Halbfertigprodukte ebenfalls gebrüht und danach als lose Waren oder auch in einer SB-Verpackung vermarktet werden.

Es ist im Übrigen von Vorteil, dass die bei der dosierten Erwärmung sich ausbildende Eigenhaut in der Lage ist, z.B. im Darm oder in einem Hüllmaterial befindliche störende Öffnungen abzudichten oder zu verschließen, mit der Folge einer sich erhöhenden Produktqualität, insbesondere bei einem späteren weiteren Lebensmittel-Zubereitungsprozess.

Zur Herstellung der vorerwähnten SB-Packung ist es nicht erforderlich, dass die Rohlinge vorher gebrüht werden. Zur Oberflächengestaltung oder Geschmacksgebung kann die an der Oberfläche koagulierte Halbfertigware geräuchert oder oberflächenbehandelt werden. Zur Oberflächenbehandlung sei zur Vermeidung von Wiederholungen auf die Offenbarung gemäß DE 103 03 274.6 verwiesen.

Auch eine Pasteurisierung ist möglich, wobei die Trennung der einzelnen Rohlinge während des Erhitzungsvorgangs entfallen kann, da die bereits koagulierte Oberfläche der Halbfertigware ein erneutes Anhaften der einzelnen Rohlinge wirksam verhindert.

Beim Pasteurisieren von Ware im Darm kommt es regelmäßig zu unerwünschten Formveränderungen, z.B. starke Krümmungen, Windungen und so weiter, die den Verkaufswert der produzierten Ware senken. Durch eine Wärmebehandlung der Halbfertigprodukte im fixierten Zustand gemäß der Erfindung wird erreicht, dass das Eiweiß des Darms und der darunter liegenden Brätschicht leicht koaguliert und sich die jetzt gefundene Form auch später, bei einer Pasteurisation in der Vakuumverpackung nicht mehr verändert. Die Koagulationsschichten des Darms und des Bräts verhindern, dass während der Vakuumbehandlung das Brät aus den Wurstenden in unerwünschter Weise austritt.

Ein wesentliches Kriterium bei der Herstellung von Brühwürstchen im Darm ist die durchgehende pergamentartige Trocknung des Darms, damit später beim Verzehr des Würstchens der Darm nicht als zäh empfunden wird. Diese Anforderung wird unter Anwendung der Erfindung erfüllt, indem der Darm in Kontakt mit heißen Flächen der formgebenden Platten gelangt. Hierbei wird das Wasser durch die Einwirkung der Hitze aus der Außenschicht des Halbfertigprodukts, dem Darm und der unmittelbar darunter liegenden Brätschicht herausgetrieben. Der so getrocknete Darm ist nicht in der Lage, erneut Wasser aufzunehmen, da die Eiweiße durch die Hitzeeinwirkung koaguliert sind. Zur Fertigstellung des Produkts kann, wie oben erwähnt, eine Oberflächenbehandlung z.B. mit Flüssigrauch, und eine sich anschließende Pasteurisierung erfolgen.

Bei einer weiteren Ausführungsform der Erfindung ist die Herstellung einer SB-Packung mit einzelnen Scheiben, wie z.B. Leberkäse oder auch Aufschnitt möglich, sofern das Eiweiß der aufeinander liegenden Flächen koaguliert ist. Diese erforderliche Behandlung kann durch Wärmestrahlung, aber auch durch Wärmekontakt erfolgen.
Dünne Aufschnittscheiben können während des Aufschneideprozesses mit Hilfe eines Messers, insbesondere Ultraschallmessers, dessen koagulierende Wirkung durch Erwärmung des Messers erhöht wird, nach dem Verpacken ebenfalls pasteurisiert werden, ohne dass nach dem Fertigungsprozess die einzelnen Aufschnittscheiben wieder eine feste Verbindung miteinander eingehen.

Bei einer weiteren Ausführungsform des erfindungsgemäßen Verfahrens wird ein mit Wurstbrät gefüllter Beutel mit Hilfe eines Formenstempels in vorgegebene Teilsegmente, Stränge oder beliebige Formen, d.h. Schnecken oder Brezeln, so unterteilt, dass der erwärmte Stempel nicht nur die Folie plastisch werden lässt und entsprechend der Vorgabe verformt, sondern die Oberfläche des geformten Bräts wird durch die Eiweißkoagulation verfestigt, so dass auch durch die sich anschließende Wärmebehandlung die erfolgte Trennung nicht mehr reversibel ist. Es wird also in diesem Fall so weit erhitzt, bis eine gewünschte Koagulation eintritt.

Da die einzelnen Brätstränge oder -teile sich nicht mehr miteinander verbinden, kann auf eine Siegelnaht zwischen den Brätsträngen oder -segmenten verzichtet werden. Nach Abschluss der Behandlung liegt somit eine verkaufsfertige SB-Packung vor. Bei dieser Verfahrensweise wird im Übrigen verhindert, dass durch die ansonsten sich einstellende Zustandsänderung des im Regelfall folienartigen Hüllmaterials beim Schweißen sich unerwünschte Stoffe freisetzen.

## Patentansprüche

1. Verfahren zur Oberflächenbehandlung, gleichzeitigem Portionieren und Formen sowie Haltbarmachen von Lebensmitteln wie Fleisch- und Wurstwaren, Wurstbrät oder dergleichen Produkten, auch ohne Einsatz von Därmen oder hüll- oder beutelartigen Folien mit folgenden Schritten:
- Verdichten des Produkts zwischen zwei formgebenden, mindestens teilweise strukturierten Platten;
- Trennen des Produkts in Formabschnitte nach erfolgter Verdichtung durch mechanisches Inkontaktkommen entsprechender Bereiche der formgebenden Platten;
- gezieltes, dosiertes kurzzeitiges Erhitzen des Produkts, vorzugsweise über die formgebenden Platten, zur Ausbildung einer einen verringerten a_{w}-Wert aufweisenden Eigenhaut auf der Oberfläche des Produkts, welche sowohl produktformstabilisierende als auch keimreduzierende Eigenschaften aufweist, wobei
- durch das Erhitzen eine dünne, nach Abkühlung wieder transparent erscheinende Eigenhautschicht mit dem reduzierten a_{w}-Wert ausgebildet wird.

2. Verfahren nach Anspruch 1,
**dadurch gekennzeichnet, dass**
durch die Formgebung ein reproduzierbares Kalibrieren von Würsten oder dergleichen Produkten vorgenommen wird, wobei die Endform durch die stabilisierende Eigenhaut bei Entnahme der Produkte aus den formgebenden Platten erhalten bleibt.

3. Verfahren nach Anspruch 1,
**dadurch gekennzeichnet, dass**
bei der Verwendung von Hüllen, insbesondere Därmen, eine gleichzeitige Keimreduzierung des Hüll- oder Darmmaterials durch die Hitzeeinwirkung erfolgt, wobei durch Hitzeeinwirkung Feuchte aus dem Hüll- oder Darmmaterial ausgetrieben wird und hierdurch eine Trocknung vorgenommen wird.

4. Verfahren nach Anspruch 3,
**dadurch gekennzeichnet, dass**
im Bereich der Trennabschnitte die formgebenden Platten mit einer thermischen Isolierung oder einer Kühlung versehen sind, um ein Verschweißen oder Verkleben des Hüllmaterials zu verhindern.

## Claims

1. Process for the simultaneous surface treatment, apportioning and shaping and conservation of foodstuffs such as meat and sausage products, sausage meat or the like products, also without the use of skins or envelope- or bag-like foils, comprising the following steps:
- compacting the product between two shaping, at least partially structured plates;
- separating the product into shaped sections after the compaction by mechanically contacting corresponding portions of the shaping plates;
- appropriately, controllably heating the product for a short time, preferably by the shaping plates, to form a natural skin on the surface of the product which has a reduced a_{w}-value and both product shape stabilizing and sterilizing properties, wherein
- the heating results in a thin natural skin layer which appears transparent again after cooling and which has the reduced a_{w}-value.

2. Process according to claim 1,
**characterized in that**
the shaping allows a reproducible end sizing of sausages or the like products, wherein the final shape is maintained due to the stabilizing natural skin when the products are removed from the shaping plates.

3. Process according to claim 1,
**characterized in that**
if envelopes, especially skins, are used, the thermal influence simultaneously allows a sterilization of the enveloping or skin material, wherein moisture is withdrawn from the enveloping or skin material by the thermal influence so that a drying process takes place.

4. A process according to claim 3,
**characterized in that**
the shaping plates are provided with a thermal insulation or a cooling in the region of the separating sections to prevent the enveloping material from bonding or sticking together.

## Revendications

1. Procédé pour le traitement de surface, le portionnement et la mise en forme simultanés, ainsi que la conservation de produits alimentaires tels que viande, charcuterie, chair à saucisse ou autres produits similaires, également sans utilisation d'intestins ou de films analogues à des gaines ou à des poches, comprenant les étapes suivantes :
- compactage du produit entre deux plaques de mise en forme, au moins partiellement structurées ;
- séparation du produit en tronçons conformés après compactage, par venue en contact mécanique de zones correspondantes des plaques de mise en forme ;
- chauffage ciblé et dosé de courte durée du produit, de préférence via les plaques de mise en forme, pour réaliser sur la surface du produit une peau propre présentant une valeur a_{w} réduite, laquelle présente à la fois des propriétés de stabilisation de forme et de réduction des germes, dans lequel
- grâce au chauffage, on réalise une mince couche de peau propre, d'apparence à nouveau transparente après le refroidissement, qui présente la valeur a_{w} réduite.

2. Procédé selon la revendication 1,
**caractérisé en ce que**, par la mise en forme, on procède à un calibrage reproductible de saucisses ou produits similaires, la forme terminale restant conservée par la peau propre de stabilisation lors de l'enlèvement du produit hors des plaques de mise en forme.

3. Procédé selon la revendication 1,
**caractérisé en ce que** lors de l'utilisation de gaines, en particulier d'intestins, une réduction simultanée des germes du matériau de gainage ou des intestins a lieu par action de la chaleur, et dans lequel grâce à l'action de la chaleur, l'humidité est chassée hors du matériau de gainage ou des intestins, et l'on procède ainsi à un séchage.

4. Procédé selon la revendication 3,
**caractérisé en ce que**, dans la zone des tronçons de séparation, les plaques de mise en forme sont pourvues d'une isolation thermique ou d'un refroidissement, pour empêcher un soudage ou un collage du matériau de gainage.
